# EUROPÄISCHE PATENTANMELDUNG

(11) **EP 2 131 120 A2**
(43) Veröffentlichungstag der Anmeldung: **09.12.2009**
(21) Anmeldenummer: 09007097.0
(22) Anmeldetag: 28.05.2009
(51) Int. Cl.: F24J 2/04, F24J 2/50, F24J 2/51

(54) **Solarkollektor**

(30) Priorität: 07.06.2008 DE 102008027309
(71) Anmelder: Robert Bosch GmbH, 70442 Stuttgart (DE)
(72) Erfinder: Kosok, Jürgen, 48565 Steinfurt (DE)

(57) **Zusammenfassung**

Die Erfindung betrifft eine Solaranlage, ein Fassadenelement und einen Solarkollektor (1), insbesondere ein Solarflachkollektor, mit einem Solarstrahlung absorbierenden Absorber (9) mit einer von einem Solarfluid durchströmbaren Kanalstruktur (3) und einem den Absorber (9) in einem Innenraum (10) aufnehmenden, zumindest teilweise solarstrahlungsdurchlässigen Gehäuse (14), wobei das Gehäuse (14) einen Isolierungsteil (12) und eine den Innenraum (10) zusammen mit dem Isolierungsteil (12) verschließende Glasabdeckung (2) aufweist.

Es ist eine Aufgabe der Erfindung, einen Solarkollektor (1), eine Solaranlage und ein Fassadenelement zu schaffen, welche die Nachteile gemäß dem Stand der Technik überwinden. Insbesondere ist es eine Aufgabe der Erfindung, einen Solarkollektor, eine Solaranlage und ein Fassadenelement zu schaffen, welche einen geringeren Materialaufwand und geringere Materialvielfalt erfordern, somit ein leichteres Recycling ermöglichen, und die einfacher zu fertigen sind.

Gekennzeichnet sind die Solaranlage, das Fassadenelement und der Solarkollektor (1) dadurch, dass der Isolierungsteil (12) des Solarkollektors (1) zumindest teilweise aus Schaumglas ausgebildet ist.

## Beschreibung

Die Erfindung betrifft einen Solarkollektor, insbesondere einen Solarflachkollektor, nach dem Oberbegriff des Patentanspruches 1.

Weiter betrifft die Erfindung eine mehrere Solarkollektoren umfassende Solaranlage nach dem Oberbegriff des Patentanspruchs 10.

Zudem betrifft die Erfindung ein Fassadenelement, insbesondere ein solarthermisches Fassadenelement, nach Patentanspruch 11.

Solarkollektoren, insbesondere Solarflachkollektoren sind allgemein bekannt. Derartige Solarkollektoren bestehen aus einer Glasabdeckung, einem Absorber und einem meist wannenförmigen Isolierungsteil mit zusätzlichem Wärmedämmungsmaterial. Der Absorber ist dabei sandwichartig zwischen der Glasabdeckung und dem Isolierungsteil angeordnet. Der Isolierungsteil, der auch zur Aufnahme des Absorbers dient, weist im Stand der Technik separates Wärmedämmungsmaterial auf und ist bevorzugt als Kunststoffwanne und dergleichen ausgebildet, um den Absorber isolierend aufzunehmen.

Der Erfindung liegt die Aufgabe zugrunde, einen Solarkollektor, eine Solaranlage und ein Fassadenelement zu schaffen, welche die Nachteile gemäß dem Stand der Technik überwinden. Insbesondere ist es eine Aufgabe der Erfindung, einen Solarkollektor, eine Solaranlage und ein Fassadenelement zu schaffen, welche einen geringeren Materialaufwand und geringere Materialvielfalt erfordern, somit ein leichteres Recycling ermöglichen, und die einfacher zu fertigen sind.

Erfindungsgemäß wird dies durch die Gegenstände mit den Merkmalen des Patentanspruches 1, des Patentanspruchs 10 und des Patentanspruchs 11 gelöst. Vorteilhafte Weiterbildungen sind den Unteransprüchen zu entnehmen.

Der erfindungsgemäße Solarkollektor ist **dadurch gekennzeichnet, dass** bei dem Solarkollektor, insbesondere einem Solarflachkollektor, mit einem Solarstrahlung absorbierenden Absorber mit einer von einem Solarfluid durchströmbaren Kanalstruktur und einem den Absorber in einem Innenraum aufnehmenden, zumindest teilweise solarstrahlungsdurchlässigen Gehäuse, wobei das Gehäuse einen Isolierungsteil und eine den Innenraum zusammen mit dem Isolierungsteil verschließende Glasabdeckung aufweist, vorgesehen ist, dass der Isolierungsteil zumindest teilweise aus Schaumglas ausgebildet ist. Schaumglas ist ein Wärmedämmstoff für den Hochbau und für betriebstechnische Anlagen aus aufgeschäumten Glas. Das heißt, der Wärmedämmstoff ist nicht wie im Stand der Technik separat vorgesehen, sondern durch die Verwendung von Schaumglas oder Foamglas ist der Wärmedämmstoff bereits in dem für das Isolierteil verwendeten Material integriert enthalten.

Der Absorber umfasst ein Leitungssystem, welches von einem Solarfluid durchströmbar ist. Das Leitungssystem umfasst einen Fluidkanal oder mehrere Fluidkanäle. Das Gehäuse ist so ausgebildet, dass es den Absorber aufnimmt. Erfindungsgemäß besteht das Isolierteil aus Schaumglas. Schaumglas, auch als Foamglas bezeichnet, ist ein geschlossenporig aufgeschäumtes Glas, welches zuverlässig wärmedämmend, wasserdicht, druckfest, dampfdicht, maßbeständig, nicht brennbar, säurebeständig, schädlingssicher, leicht zu bearbeiten und gut recyclebar ist. Verschiedene Porengrößen sind herstellbar, wodurch spezifisches Gewicht, Wärmedämmeigenschaften, Festigkeit und Bearbeitbarkeit variiert werden. Aufgrund der Eigenschaften des Schaumglases kann auf zusätzliche Wärmedämmungsmaterialien verzichtet werden.

Das Schaumglas oder zumindest ein Teil des Schaumglasmaterials kann ausgewählt sein aus der Gruppe umfassend Solarglas, Foamglas, recyceltes Foamglas, transparentes oder teiltransparentes Foamglas, Altglas und dergleichen. Auf diese Weise lässt sich ein im Wesentlichen transparenter oder teiltransparenter Solarkollektor realisieren.

In einer Ausführungsform der vorliegenden Erfindung ist vorgesehen, dass der Isolierungsteil als Schaumglasplatte ausgebildet ist, sodass kein zusätzliches Wärmedämmungsmaterial erforderlich ist. Dabei ist der Absorber sandwichartig zwischen der Glasabdeckung und dem Isolierteil angeordnet.

In einer Ausführungsform des erfindungsgemäßen Solarkollektorgrundkörpers ist vorgesehen, dass der Absorber und der Isolierungsteil als Absorber-Isolierungsverbund verbunden ausgebildet sind. Auf diese Weise lässt sich eine kompakte Einheit realisieren. Aufgrund der überwiegenden Verwendung von Glas kommt es bei dem Verbund nicht oder kaum zu Wärmeausdehnungsspannungen, da die Wärmeausdehnungskoeffizienten der verwendeten Materialen gleich sind oder sich nur unwesentlich voneinander unterscheiden.

Bei einer weiteren Ausführungsform ist vorgesehen, dass die Kanalstruktur zumindest teilweise integriert in dem Isolierungsteil ausgebildet ist. Hierdurch ergibt sich ein besonders kompakter Aufbau.

In noch einer weiteren Ausführungsform der vorliegenden Erfindung ist vorgesehen, dass die Kanalstruktur als in den Isolierungsteil eingeprägte Kanalabschnitte ausgebildet ist. Auf diese Weise lässt sich die Kanalstruktur zumindest teilweise mit einfachen Fertigungsverfahren ausformen. Die Kanalabschnitte können parallel oder der Reihe nach von Solarfluid durchströmt werden. Es lassen sich so zusätzliche Komponenten zur Ausbildung einer Kanalstruktur einsparen. Das Einformen der Kanalstruktur in den Isolierungsteil kann bereits bei der Herstellung der Schaumglasplatten oder auch in einem nachfolgenden Arbeitsschritt erfolgen, beispielsweise durch teilweises Aufschmelzen, spanende Bearbeitung und/oder Einfügen eines separaten Rohres.

Ein Ausführungsbeispiel des Solarkollektorgrundkörpers sieht vor, dass der Isolierungsteil mit der Glasabdeckung mittelbar oder unmittelbar verbunden ist, sodass die Kanalabschnitte zumindest teilweise von dem Isolierungsteil und der Glasabdeckung umschlossen ausgebildet sind. Im Hinblick auf eine Integration der Solarkollektorkomponenten kann ein mit eingeprägten Kanalabschnitten versehener Isolierungsteil mit einer beschichteten Glasabdeckung zu einer Einheit verklebt sein.

Ein weiteres Ausführungsbeispiel sieht vor, dass der Anteil *m* des Glasmaterials der Solarkollektorkomponenten an der Gesamtmasse des Solarkollektors in einem Bereich *m* ≥ 75 %, bevorzugt *m* ≥ 80 %, weiter bevorzugt *m* ≥ 85 % und am meisten bevorzugt *m* ≥ 90 % liegt. Hierdurch weist ein Großteil des verwendeten Materials ähnliche oder gleiche Materialeigenschaften auf, was die Fertigung erleichtert. Unter Glasmaterial ist auch das für den Isolierteil verwendete Schaumglas zu fassen.

Ein Ausführungsbeispiel ist **dadurch gekennzeichnet, dass** zwischen der Kanalstruktur und der Glasabdeckung eine Wärmeleitschicht angeordnet ist, die direkt an die Kanalstruktur und die Glasabdeckung angrenzt und einen Wärmestrom und/oder einen Temperaturausgleich zwischen dem in der Kanalstruktur fließenden Solarfluid und der Glasabdeckung bewirkt. Die Beschaffenheit der Wärmeleitschicht kann selbst pastöser und/oder fester Art sein.

Ein Ausführungsbeispiel sieht vor, dass die Glasabdeckung eine außenliegende Glasplatte und eine parallel dazu angeordnete innenliegende Glasplatte umfasst, wobei die Glasplatten von einer umlaufenden Abdichtung gasdicht voneinander getrennt und zueinander beabstandet sind und einen Zwischenraum bilden, und wobei die innenliegende Glasplatte auf ihrer dem Zwischenraum zugewandten Seite eine strahlungsabsorbierende Beschichtung aufweist.

Die erfindungsgemäße Solaranlage umfassend mehrere Solarkollektoren ist **dadurch gekennzeichnet, dass**, mindestens einer der Solarkollektoren nach einem erfindungsgemäßen Solarkollektor ausgebildet ist. Bevorzugt sind mehrere oder alle Solarkollektoren nach Art des erfindungsgemäßen Solarkollektors ausgebildet.

Das erfindungsgemäße Fassadenelement, insbesondere ein solarthermisches Fassadenelement, ist **dadurch gekennzeichnet, dass** es einen erfindungsgemäßen Solarkollektor aufweist. Das Fassadenelement kann beliebig geformt sein, beispielsweise plattenförmig oder rohrförmig.

In einer erfindungsgemäßen Ausführungsform ist vorgesehen, dass der Solarkollektor in eine Pfosten-Riegel-Konstruktion integriert ist. Das als Pfosten-Riegel-Konstruktion ausgebildete Fassadenelement weist einen entsprechenden Innenraum auf, in welchem der Solarkollektor aufgenommen ist. Auf diese Weise lässt sich der Solarkollektor leicht verbauen.

Mit dem erfindungsgemäßen Solarkollektor, der erfindungsgemäßen Solaranlage und dem erfindungsgemäßen Fassadenelement werden insbesondere die folgenden Vorteile realisiert:

Die Verwendung von Plattenware aus Schaumglas, die mit einer wasser- bzw. wärmeträgerdichten Kanalstruktur versehen ist, ermöglicht einen einfachen Aufbau eines Absorber-Wärmedämmungsverbunds, der im Wesentlichen aus Glas mit einer geringen Menge an Metalloxid, zum Beispiel an der Absorptionsschicht, besteht. Die Wärmeausdehnungskoeffizienten der Glasabdeckung und des Absorbers sind kaum unterschiedlich, sodass in dem Verbund kaum Spannungen aufgrund unterschiedlicher Wärmeausdehnungen auftreten. Es ist ein Flachkollektoraufbau möglich, bei dem etwa 80 % bis 90 % der Gesamtmasse aus Glas bestehen. Metallische Bauteile und Kunststoffe sind nur zu einem wesentlich untergeordneten Anteil vorhanden. Der gemäß der Erfindung ausgebildete Solarkollektor lässt sich zudem gut recyceln. Das verwendete Schaumglas kann zu einem hohen Anteil aus Altglas bestehen, wodurch nicht zuletzt sich der Energieaufwand für die Herstellung reduziert. Mit dem erfindungsgemäßen Aufbau können auf einfache Weise solarthermisch aktive Fassadenelemente hergestellt werden, die eine einfache Integration in eine Pfosten-Riegel-Konstruktion ermöglichen. Bei einer transparenten Ausführung des Schaumglases können zumindest teiltransparente solarthermische Fassaden hergestellt werden.

Die Zeichnungen stellen ein Ausführungsbeispiel der Erfindung dar und zeigen in den Figuren:
- Fig. 1: schematisch eine Draufsicht auf einen erfindungsgemäßen Solarflachkollektor und
- Fig. 2: schematisch einen Querschnitt durch eine Ausführungsform eines erfindungsgemäßen Solarkollektors.

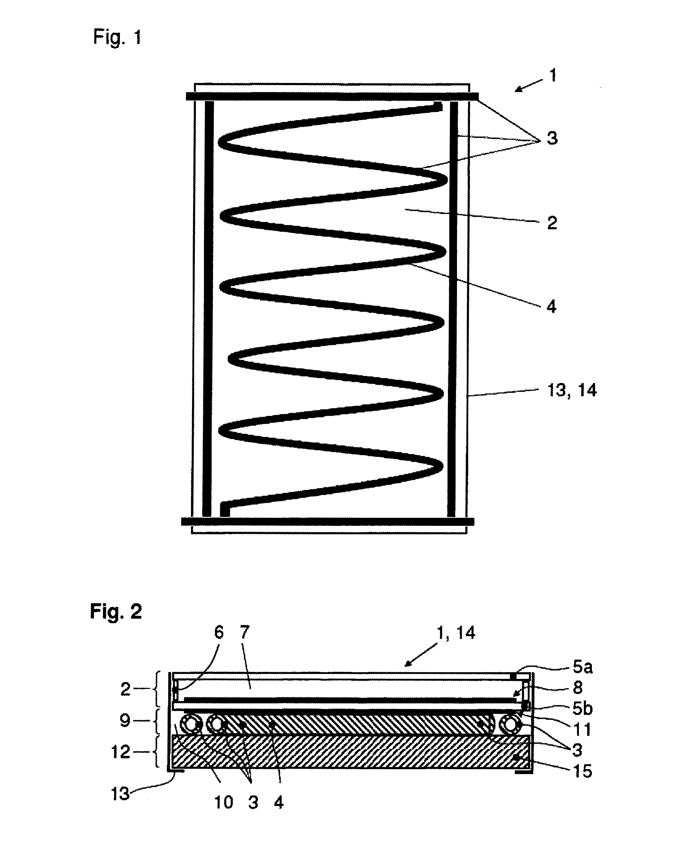

Fig. 1 zeigt schematisch eine Draufsicht auf einen erfindungsgemäßen Solarflachkollektor 1. Der Solarkollektor 1 ist im Wesentlichen plattenförmig ausgebildet mit einer in der Draufsicht im Wesentlichen rechteckigen Form. Durch eine Glasabdeckung 2 des Solarkollektors 1 ist die darunter angeordnete Kanalstruktur 3 erkennbar, welche einen geschwungen verlaufenden Kanal 4 umfasst. Der Aufbau des Solarkollektors 1 ist in Bezug auf Fig. 2 genauer beschrieben.

Fig. 2 zeigt schematisch einen Querschnitt durch eine Ausführungsform des erfindungsgemäßen Solarkollektors 1 nach Fig. 1. Der plattenförmig ausgebildete Solarkollektor 1 umfasst die im Folgenden beschriebenen Komponenten. In der Darstellung oben weist der Solarkollektor 1 die Glasabdeckung 2 auf. Die Glasabdeckung 2 umfasst in der dargestellten Fig. 2 zwei voneinander beabstandete, etwa parallel zueinander angeordnete Glasplatten 5a und 5b, die über gasdichte Abdichtungen 6, welche auch den Abstand zwischen den Glasplatten 5a und 5b bestimmen, gasdicht miteinander verbunden sind. In einem so gebildeten Zwischenraum 7 ist auf einer dem Zwischenraum 7 zugewandten Seite der unteren, innenliegenden Glasplatte 5b eine absorbierende Beschichtung 8 ausgebildet.

Unter der Glasabdeckung 2 ist ein Absorber 9 in einem Innenraum 10 angeordnet. Der Absorber weist an der der Glasabdeckung 2 zugewandten Seite eine Wärmeleitfläche 11 aus Metall, Kunststoff oder Glasfaserverstärktem Kunststoff (GFK) auf. Benachbart zu der Wärmeleitfläche 11 ist die Kanalstruktur 3 ausgebildet, welche vorliegend ein als Mäander geformtes Rohrregister ist, optional aber auch als Harfe und dergleichen geformt oder auch als Flächenabsorber ausgebildet sein kann, welcher die Wärmeleitfläche 11 und Hydraulikkanäle integriert aufweist.

Unterhalb des Absorbers 9 ist der Isolierungsteil 12 angeordnet, der vorliegend aus einer Schaumglasplatte 15 geformt ist. Dieser Isolierungsteil 12 fungiert als Wärmedämmung und ist aus Schaumglas hergestellt. Optional können der Absorber 9 und der Isolierteil 12, oder auch der Absorber 9, der Isolierteil 12 und die Glasabdeckung 2 integriert mit den Hydraulikkanälen in einer Einheit ausgebildet sein.

Die Glasabdeckung 2 und der Isolierungsteil 12 bilden zusammen mit umgebendem Halterahmen 13 ein Gehäuse 14. Dabei sind der Isolierungsteil 12 und die Glasabdeckung 2 voneinander beabstandet, sodass zwischen der Glasabdeckung 2 und dem Isolierungsteil 12 der Innenraum 10 gebildet ist, in welchem der Absorber 9 angeordnet ist.

Der Aufbau des erfindungsgemäßen Solarkollektors 1 nach Figur 2 sieht vor, dass der Solarkollektor 1 mit der Glasabdeckung 2 zur Sonne hin ausgerichtet wird. Die Sonnenstrahlung tritt durch die Glasplatte 5a und den Zwischenraum 7 hindurch. Die Glasplatte 5a kann mit einer Antireflex-Beschichtung und/oder mit einer Low-Emission-Beschichtung versehen sein. Glasplatte 5a und Zwischenraum 7 dienen der Isolierung des Solarkollektors gegenüber Umgebungseinflüssen wie Lufttemperatur, Wind, Regen oder Staub. Die Sonnenstrahlung trifft dann auf die auf der Glasplatte 5b aufgetragenen Beschichtung 8 auf, wo sie absorbiert und in Wärme umgewandelt wird. Die Glasplatte 5b leitet die Wärme an eine sie rückseitig kontaktierende Wärmeleitschicht 11 durch, die wiederum von einem in der Kanalstruktur 3 zirkulierenden Solarfluid gekühlt wird. Um Wärmeverluste durch Strahlung und/oder Konvektion zu verhindern, liegt auf der Rückseite der Kanalstruktur 3 das Isolierungsteil 12, gebildet aus einer Schaumglasplatte 15, die aufgrund ihrer Schaumstruktur gute Wärmedämmeigenschaften aufweist und zudem formstabil und selbsttragend ist. Zusammengehalten und gegen mechanische Einflüsse geschützt wird der komplette Aufbau mit dem Halterahmen 13.

## Patentansprüche

1. Solarkollektor (1), insbesondere ein Solarflachkollektor, mit
• einem Solarstrahlung absorbierenden Absorber (9) mit einer von einem Solarfluid durchströmbaren Kanalstruktur (3) und
• einem den Absorber (9) in einem Innenraum (10) aufnehmenden, zumindest teilweise solarstrahlungsdurchlässigen Gehäuse (14), wobei das Gehäuse (14) einen Isolierungsteil (12) und eine den Innenraum (10) zusammen mit dem Isolierungsteil (12) verschließende Glasabdeckung (2) aufweist,
**dadurch gekennzeichnet, dass** der Isolierungsteil (12) zumindest teilweise aus Schaumglas ausgebildet ist.

2. Solarkollektor (1) nach Anspruch 1,
**dadurch gekennzeichnet, dass** der Isolierungsteil (12) als Schaumglasplatte (15) ausgebildet ist, sodass kein zusätzliches Wärmedämmungsmaterial erforderlich ist.

3. Solarkollektor (1) nach Anspruch 1 oder 2,
**dadurch gekennzeichnet, dass** der Absorber (9) und der Isolierungsteil (12) als Absorber-Isolierungsverbund verbunden ausgebildet sind.

4. Solarkollektor (1) nach einem der Ansprüche 1 bis 3,
**dadurch gekennzeichnet, dass** die Kanalstruktur (3) zumindest teilweise integriert in dem Isolierungsteil (12) ausgebildet ist.

5. Solarkollektor (1) nach einem der Ansprüche 1 bis 4,
**dadurch gekennzeichnet, dass** die Kanalstruktur (3) als in den Isolierungsteil (12) eingeprägte, seriell und/oder parallel durchströmbare Kanalabschnitte ausgebildet ist.

6. Solarkollektor (1) nach einem der Ansprüche 1 bis 5,
**dadurch gekennzeichnet, dass** der Isolierungsteil (12) mit der Glasabdeckung (2) verbunden ist, sodass die Kanalstruktur (3) zumindest teilweise von dem Isolierungsteil (12) und der Glasabdeckung (2) umschlossen ausgebildet ist.

7. Solarkollektor (1) nach einem der Ansprüche 1 bis 6,
**dadurch gekennzeichnet, dass** der Anteil *m* des Glasmaterials der Komponenten des Solarkollektors (1) an der Gesamtmasse des Solarkollektors (1) in einem Bereich *m* ≥ 75 %, bevorzugt *m* ≥ 80 %, weiter bevorzugt *m* ≥ 85 % und am meisten bevorzugt *m* ≥ 90 % liegt.

8. Solarkollektor (1) nach einem der Ansprüche 1 bis 7,
**dadurch gekennzeichnet, dass** zwischen der Kanalstruktur (3) und der Glasabdeckung (2) eine Wärmeleitschicht (11) angeordnet ist, die direkt an die Kanalstruktur (3) und die Glasabdeckung (2) angrenzt und einen Wärmestrom und/oder einen Temperaturausgleich zwischen dem in der Kanalstruktur (3) fließenden Solarfluid und der Glasabdeckung (2) bewirkt.

9. Solarkollektor (1) nach einem der Ansprüche 1 bis 8,
**dadurch gekennzeichnet, dass** die Glasabdeckung (2) eine außenliegende Glasplatte (5a) und eine parallel dazu angeordnete innenliegende Glasplatte (5b) umfasst, wobei die Glasplatten (5a, 5b) von einer umlaufenden Abdichtung (6) gasdicht voneinander getrennt und zueinander beabstandet sind und einen Zwischenraum (7) bilden, und wobei die innenliegende Glasplatte (5b) auf ihrer dem Zwischenraum (7) zugewandten Seite eine strahlungsabsorbierende Beschichtung (8) aufweist.

10. Solaranlage umfassend mehrere Solarkollektoren,
**dadurch gekennzeichnet, dass** mindestens ein Solarkollektor (1) gemäß einem der Ansprüche 1 bis 9 ausgebildet ist.

11. Fassadenelement, insbesondere ein solarthermisches Fassadenelement, mit mindestens einem Solarkollektor (1) nach einem der Ansprüche 1 bis 9.

12. Fassadenelement nach Anspruch 11,
**dadurch gekennzeichnet, dass** der mindestens eine Solarkollektor (1) in eine Pfosten-Riegel-Konstruktion integriert ist.
